# EUROPEAN PATENT SPECIFICATION

(11) **EP 4 239 714 B1**
(45) Date of publication and mention of the grant of the patent: **09.09.2026**
(21) Application number: 21886173.0
(22) Date of filing: 26.10.2021
(51) Int. Cl.: H01M 4/133, H01M 4/587, H01M 4/62, H01M 10/0525, H01M 10/0562, H01M 4/02

(54) **NEGATIVE ELECTRODE FOR ALL-SOLID-STATE SECONDARY CELL, AND ALL-SOLID-STATE SECONDARY CELL**
NEGATIVE ELEKTRODE FÜR FESTKÖRPERSEKUNDÄRZELLE UND FESTKÖRPERSEKUNDÄRZELLE
ÉLECTRODE NÉGATIVE POUR ACCUMULATEUR ENTIÈREMENT SOLIDE ET ACCUMULATEUR ENTIÈREMENT SOLIDE

(30) Priority: 02.11.2020 JP 2020183410
(43) Date of publication of application: 06.09.2023
(73) Proprietor: Maxell, Ltd., Kyoto 618-8525 (JP)
(72) Inventor: SATO, Yuta, Otokuni-gun, Kyoto 618-8525 (JP); FURUKAWA, Kazuki, Otokuni-gun, Kyoto 618-8525 (JP); NISHIMURA, Masaki, Otokuni-gun, Kyoto 618-8525 (JP); KAMIZORI, Haruki, Otokuni-gun, Kyoto 618-8525 (JP)
(74) Representative: Diehl & Partner
(86) International application number: PCT/JP2021/039408
(87) International publication number: WO 2022/092055

(56) References cited:
- WO-A1-2014/030525
- WO-A1-2015/152215
- WO-A1-2017/141735
- WO-A1-2017/141735
- WO-A1-2017/169616
- US-A1- 2020 087 155
- KIM DONG HYEON ET AL: "Sheet-type Li6PS5Cl-infiltrated Si anodes fabricated by solution process for all-solid-state lithium-ion batteries", JOURNAL OF POWER SOURCES, vol. 426, 14 April 2019 (2019-04-14), AMSTERDAM, NL, pages 143 - 150, XP093261616, ISSN: 0378-7753, DOI: 10.1016/j.jpowsour.2019.04.028
- OTOYAMA MISAE ET AL: "Optical microscopic observation of graphite composite negative electrodes in all-solid-state lithium batteries", vol. 323, 1 June 2018 (2018-06-01), NL, pages 123 - 129, XP093261539, ISSN: 0167-2738, Retrieved from the Internet <URL:https://pdf.sciencedirectassets.com/271411/1-s2.0-S0167273818X00083/1-s2.0-S0167273817307713/main.pdf> DOI: 10.1016/j.ssi.2018.04.023
- KIM DONG HYEON ET AL: "Infiltration of Solution-Processable Solid Electrolytes into Conventional Li-Ion-Battery Electrodes for All-Solid-State Li-Ion Batteries", NANO LETTERS, vol. 17, no. 5, 31 March 2017 (2017-03-31), United States, pages 3013 - 3020, XP093376697, ISSN: 1530-6984, DOI: 10.1021/acs.nanolett.7b00330

## Description

### Technical Field

The present invention relates to a negative electrode for an all-solid-state secondary battery with a low resistance value, and an all-solid-state secondary battery in which the negative electrode is used.

### Background Art

In recent years, the development of portable electronic devices such as cellular phones and laptop personal computers, the practical use of electric vehicles, and the like have led to the need for compact and lightweight secondary batteries that have a high capacity and a high energy density.

Currently, in lithium secondary batteries that can meet this demand, especially lithium-ion secondary batteries, a lithium-containing composite oxide such as lithium cobalt oxide (LiCoO₂) or lithium nickel oxide (LiNiO₂) is used as a positive-electrode active material, graphite or the like is used as a negative-electrode active material, and an organic electrolyte solution containing an organic solvent and a lithium salt as nonaqueous electrolytes is used.

With the further development of devices that use lithium-ion secondary batteries, there is demand for lithium-ion secondary batteries having a longer life, a higher capacity, and a higher energy density.

Regarding increasing the capacity of a lithium-ion secondary battery (nonaqueous electrolyte secondary battery) having an organic electrolyte solution, Patent Document 1 proposes a technique for covering a surface of a carbon material, which is a negative-electrode active material, with a solid electrolyte having lithium-ion conductivity in order to reduce the irreversible capacity of the negative electrode, for example.

Further, there is also demand for lithium-ion secondary batteries having a longer life, a higher capacity, a higher energy density, and higher reliability.

However, since an organic electrolyte solution used in a lithium-ion secondary battery contains a flammable organic solvent, the organic electrolyte solution may abnormally generate heat when an abnormal situation such as a short circuit occurs in the battery. In recent years, as the energy density of lithium-ion secondary batteries and the amount of an organic solvent in the organic electrolyte solution have been increased, there is a growing need for reliability in lithium-ion secondary batteries.

Under these circumstances, all-solid-state lithium secondary batteries (all-solid-state secondary batteries) in which no organic solvents are used have been gaining attention. An all-solid-state secondary battery includes, instead of conventional organic solvent-based electrolytes, a molded body made of a solid electrolyte in which no organic solvents are used, and is very safe because there is no risk that the solid electrolyte will abnormally generate heat.

All-solid-state secondary batteries are very safe as well as being highly reliable and highly environmentally resistant, and have a long life. Therefore, it is anticipated that all-solid-state secondary batteries will become maintenance-free batteries that can continue to contribute to the development of society, as well as to safety and security. Providing all-solid-state batteries to society will contribute to achievement of the following goals of the 17 Sustainable Development Goals (SDGs) established by the United Nations: Goal 12 (to ensure sustainable production and consumption patterns), Goal 3 (to ensure healthy lives and promote well-being for all people of all ages), Goal 7 (to ensure access for all people to affordable, reliable, sustainable and modern energy), and Goal 11 (to achieve inclusive, safe, resilient and sustainable cities and human settlements).

Also, various improvements have been attempted in all-solid-state secondary batteries. Patent Document 2 proposes use of, in an all-solid-state secondary battery, a covered negative-electrode active material that is inhibited from generating heat and whose resistance is reduced by covering a structural defective portion of the negative-electrode active material having a graphite structure with particulate lithium niobate having an average particle size of 1.5 nm or less, for example.

On the other hand, Patent Document 3 proposes an all-solid-state secondary battery whose charging-discharging capacity is increased as a result of covering a surface of a positive-electrode active material containing an alkali metal such as Li, graphite, hard carbon, or the like with a sulfide-based solid electrolyte layer, and using a composite positive-electrode active material obtained by smoothing the sulfide-based solid electrolyte layer.

Patent Document 4 discloses an all-solid-state lithium-ion battery including Si electrodes into which Li₆PS₅Cl is infiltrated.

Patent Document 5 discloses an all-solid-state lithium-ion battery including graphite into which Li₆PS₅Cl is infiltrated.

### Prior Art Documents

### Patent Document

Patent Document 1: WO 2017/169616 A1
Patent Document 2: JP 2017-54615 A
Patent Document 3: WO 2018/038037 A1
Patent Document 4: Kim Dong Hyeon et al., « Sheet-type Li6PS5Cl-infiltrated Si anodes fabricated by solution process for all-solid-state lithium-ion batteries », Journal of Power Sources, Vol. 426, pages 143-150
Patent Document 5: Kim Dong Hyeon et al., "Infiltration of Solution-Processable Solid Electrolytes into Conventional Li-Ion-Battery Electrodes for All-Solid-State Li-Ion Batteries", Nano Letters, vol. 17, no. 5, pages 3013-3020

### Disclosure of Invention

### Problem to be Solved by the Invention

Nowadays, the number of fields to which all-solid-state secondary batteries are applied is rapidly increasing. It is also conceivable that they may be used in, for example, applications that require electric discharge at large current values, and therefore, there is a need to enhance the load properties to meet these requirements. Also, a method for charging an all-solid-state secondary battery at a constant current until the battery voltage reaches a predetermined value (constant current charging), and then charging the all-solid-state secondary battery at a constant voltage until the current value decreases and reaches a predetermined value (constant voltage charging) is generally used as a method for charging an all-solid-state secondary battery, and the charging capacity during constant current charging is preferably large in order to improve rapid charging properties of the all-solid-state secondary battery, for example. Because examples of a means for improving load properties of the all-solid-state secondary battery and increasing charging capacity (CC capacity) during constant current charging include reducing the resistance value of the negative electrode in this manner, there is demand for the development of techniques for achieving this.

As described above, Patent Document 2 discloses that the resistance of the negative-electrode active material having a graphite structure can be reduced by covering the structural defective portion of the negative-electrode active material with small particulate lithium niobate. However, it is not possible to reduce the resistance value of the negative electrode to an extent where the properties of the all-solid-state secondary battery are sufficiently improved.

The present invention was achieved in light of the aforementioned circumstances, and it is an object thereof to provide a negative electrode for an all-solid-state secondary battery having a low resistance value, and an all-solid-state secondary battery in which the negative electrode is used.

### Means for Solving Problem

A negative electrode for an all-solid-state secondary battery according to claim 1 includes a molded body made of a negative-electrode mixture containing a solid electrolyte and a negative-electrode material that contains a negative-electrode active material, in which the negative-electrode material contains a carbon material as the negative-electrode active material, an argyrodite-type sulfide-based solid electrolyte is contained as the solid electrolyte, and an A/B value is 0.1 or more and 0.8 or less where a percentage of the area of the carbon material to the area of a surface of the molded body is A(%) and a percentage of the area of the carbon material to the area of a cross-section of the molded body is B(%).

Also, an all-solid-state secondary battery according to claim 6 includes: a positive electrode; a negative electrode; and a solid electrolyte layer located between the positive electrode and the negative electrode, in which the all-solid-state secondary battery includes the negative electrode for an all-solid-state secondary battery according to the present invention as the negative electrode.

### Effects of the Invention

According to the present invention, it is possible to provide a negative electrode for an all-solid-state secondary battery with a low resistance value, and an all-solid-state secondary battery in which the negative electrode is used.

### Brief Description of Drawings

[FIG. 1] FIG. 1 is a schematic cross-sectional view showing an example of an all-solid-state secondary battery according to the present invention.
[FIG. 2] FIG. 2 is a schematic plan view showing another example of an all-solid-state secondary battery according to the present invention.
[FIG. 3] FIG. 3 is a cross-sectional view taken along line I-I in FIG. 2.

### Description of the Invention

### Negative Electrode for All-Solid-State Secondary Battery

A negative electrode for an all-solid-state secondary battery according to the present invention includes a molded body made of a negative-electrode mixture containing a solid electrolyte and a negative-electrode material that contains a carbon material as a negative-electrode active material.

The molded body made of the negative-electrode mixture has an A/B value of 0.1 or more and 0.8 or less where a percentage of the area of the carbon material to the area of a surface of the molded body is A(%) and a percentage of the area of the carbon material to the area of a cross-section of the molded body is B(%).

Because the carbon material, which is used as a negative-electrode active material, is generally hydrophobic and has low affinity with a solid electrolyte, a favorable interface is unlikely to form therebetween in the negative electrode (the molded body made of the negative-electrode mixture) that contains this material and solid electrolyte, and it is difficult to reduce the resistance value of the negative electrode.

In view of this, in the present invention, the A/B value of the molded body made of the negative-electrode mixture that constitutes the negative electrode is set to 0.1 or more and 0.8 or less where the percentage of the area of the carbon material to the area of a surface of the molded body is A(%) and the percentage of the area of the carbon material to the area of a cross-section of the molded body is B(%).

The molded body made of the negative-electrode mixture that satisfies the above A/B value can be formed using a negative-electrode material that contains a carbon material as a negative-electrode active material and has a layer containing a solid electrolyte on the surface of the negative-electrode material.

In this case, the molded body made of the negative-electrode mixture contains the carbon material and the solid electrolyte contained in the negative-electrode material, and a solid electrolyte used separately from the negative-electrode material, and the like. Here, on the surface of the molded body made of the negative-electrode mixture, the number of portions where the layer of the negative-electrode material containing the solid electrolyte is exposed is large. Therefore, the percentage of the solid electrolyte is higher than that inside the molded body (i.e., the percentage of the carbon material is low). Thus, comparing the surface and the cross-section of the molded body made of the negative-electrode mixture, the percentage of the area of the carbon material to the area of the surface is smaller than the percentage of the area of the carbon material to the area of the cross-section.

Also, when the A/B value is 0.8 or less, the carbon material can be covered to an extent where a favorable interface can be formed between the solid electrolyte layer in the negative-electrode material and the solid electrolyte that is present separately from the negative-electrode material in the molded body made of the negative-electrode mixture. Thus, the negative electrode for an all-solid-state secondary battery according to the present invention, which is constituted by this molded body, has a low resistance value and high lithium-ion acceptability. Therefore, it is possible to increase the CC capacity of the all-solid-state secondary battery in which the negative electrode is used (i.e., the all-solid-state secondary battery according to the present invention), and to improve load properties. The A/B value is preferably 0.75 or less, and more preferably 0.6 or less.

Also, if the A/B value is excessively small, electron conductivity in the molded body made of the negative-electrode mixture tends to decrease, and a side reaction of the solid electrolyte may occur. Therefore, the A/B value is preferably 0.1 or more, and more preferably 0.15 or more.

Furthermore, graphite, hard carbon, or the like is used in the negative electrode (will be described later in detail) as a carbon material, which is a negative-electrode active material. However, if the negative electrode contains only hard carbon as a negative-electrode active material, for example, the A/B value is particularly preferably 0.2 or more and 0.6 or less. On the other hand, if the negative electrode contains only graphite as a negative-electrode active material, the A/B value is preferably 0.1 or more, and more preferably 0.4 or less.

The percentage A of the area of the carbon material to the area of the surface of the molded body made of the negative-electrode mixture, and the percentage B of the area of the carbon material to the area of a cross-section of the molded body made of the negative-electrode mixture can be obtained using the following method.
(1) As for a surface of the molded body made of the negative-electrode mixture when the A is obtained, and a cross-section obtained by cutting the molded body made of the negative-electrode mixture perpendicularly to a planar direction of the molded body when the B is obtained, a field of view of 250 µm × 160 µm is imaged using a scanning electron microscope (SEM) having a resolution of 5 nm or more at a magnification of 500 times, and the obtained file is imported into image analysis software "ImageJ" (default setting).
(2) A histogram is acquired by performing "image analysis". A histogram having two peaks can be obtained in this case, where the left peak (a) represents the carbon material and the right peak (b) represents the solid electrolyte.
(3) The frequency of the carbon material can be obtained by integrating the frequency of a tonal distance range from a "section 1" to 2n where, in the obtained histogram, the local minimum between the peak (a) and the peak (b) is defined as the "section 1", and the tonal distance from the "section 1" to the highest point of the peak (a) is n. Note that the "local minimum" refers to the least frequent point between the peaks (a) and (b) calculated by ImageJ.
(4) Then, the frequency of the carbon material when the area of the entire field of view (including voids present in the field of view) imaged by SEM is set to 1 is calculated.
(5) The above operations (1) to (4) are performed on ten fields of view of the surface of the molded body made of the negative-electrode mixture and ten fields of view of the cross-section that is cut out from the molded body made of the negative-electrode mixture to calculate the frequency of the carbon material, and the averages of the obtained values are calculated. The percentage of the area of the carbon material to the area of the surface of the molded body is denoted by A, and the percentage of the area of the carbon material to the area of the cross-section of the molded body is denoted by B.

Also, the A value is preferably 0.05 or more, more preferably 0.1 or more, and preferably 0.4 or less, and more preferably 0.2 or less. Further, the B value is preferably 0.2 or more, more preferably 0.3 or more, and preferably 0.95 or less, and more preferably 0.9 or less.

The A, B, and A/B values can be adjusted by adjusting a composition ratio of the components that constitute the molded body made of the negative-electrode mixture.

Examples of the negative electrode for an all-solid-state secondary battery include molded bodies (e.g., pellets) formed by molding a negative-electrode mixture, and those having a structure in which a layer formed by a molded body made of a negative-electrode mixture (negative-electrode mixture layer) is formed on a current collector.

Examples of the carbon material constituting a negative-electrode material include graphite (natural graphite; artificial graphite obtained by graphitizing easily-graphitizable carbon such as pyrolytic carbon, mesophase carbon microbeads, or carbon fibers at 2800°C or more; etc.), easily-graphitizable carbon (soft carbon), hardly-graphitizable carbon (hard carbon), pyrolytic carbon, coke, glassy carbon, fired products obtained by firing organic polymer compounds, mesophase carbon microbeads, carbon fibers, and activated carbon, and these materials may be used alone or in combination of two or more. In particular, graphite is preferable in view of having a high energy density, and hard carbon is preferable in view of easily molding an electrode to a molded body. Thus, it is possible to select a material depending on properties required for the carbon material.

An argyrodite-type sulfide-based solid electrolyte having high lithium ion conductivity is used for a solid electrolyte that forms a layer formed on the surface of the negative-electrode material.

Examples of the argyrodite-type sulfide-based solid electrolyte include solid electrolytes represented by the general formula (1) below, such as Li₆PS₅Cl, and a solid electrolyte represented by the general formula (2) below.

Li_{7-x+y}PS₆₋ₓCl_{x + y} (1)

In the general formula (1), *y* and *x* satisfy 0.05≤y≤0.9 and -3.0x+1.8≤y≤-3.0x+5.7.

Li₇₋ₐPS₆₋ₐCl_{b}Br_{c} (2)

In the general formula (2), *a, b,* and *c* satisfy a=b+c, 0<a≤1.8, and 0.1≤b/c≤10.0.

Other solid electrolytes can also be added to the solid electrolyte in the negative-electrode material together with the argyrodite-type sulfide-based solid electrolyte. Examples of such other solid electrolytes include sulfide-based solid electrolytes other than the argyrodite-type sulfide-based solid electrolyte, hydride-based solid electrolytes, and oxide-based solid electrolytes.

Examples of the sulfide-based solid electrolytes other than the argyrodite-type sulfide-based solid electrolyte include particles of Li₂S-P₂S₅-based glass, Li₂S-SiS₂-based glass, Li₂S-P₂S₅-GeS₂-based glass, and Li₂S-B₂S₃-based glass; and LGPS-based glass (Li₁₀GeP₂S₁₂ etc.).

Examples of the hydride-based solid electrolytes include LiBH₄, and solid solutions of LiBH₄ and a following alkali metal compound (e.g., solid solutions in which the mole ratio between LiBH₄ and the alkali metal compound is 1:1 to 20:1). At least one selected from the group consisting of lithium halides (e.g., LiI, LiBr, LiF, and LiCl), rubidium halides (e.g., RbI, RbBr, RbF, and RbCl), cesium halides (e.g., CsI, CsBr, CsF, and CsCl), lithium amides, rubidium amides, and cesium amides can be used as the alkali metal compound in the above-mentioned solid solution.

Examples of the oxide-based solid electrolytes include Li₇La₃Zr₂O₁₂, LiTi(PO₄)₃, LiGe(PO₄)₃, and LiLaTiO₃.

From the viewpoint of satisfactorily ensuring the effect of reducing the resistance value of the negative electrode for an all-solid-state secondary battery, the amount of the solid electrolyte in the negative-electrode material is preferably 5 parts by mass or more, and more preferably 10 parts by mass or more with respect to 100 parts by mass of the carbon material. However, if the amount of the solid electrolyte in the negative-electrode material is excessively large, the capacity of the negative-electrode active material may decrease or the conductivity in the molded body made of a negative-electrode mixture may decrease. Therefore, the amount of the solid electrolyte in the negative-electrode material is preferably 250 parts by mass or less, and more preferably 200 parts by mass or less with respect to 100 parts by mass of the carbon material.

Note that, if another solid electrolyte is used for a negative-electrode material together with an argyrodite-type sulfide-based solid electrolyte, the percentage of the argyrodite-type sulfide-based solid electrolyte to the total amount of the solid electrolyte in the negative-electrode material is preferably 10 mass% or more. Also, because all of the solid electrolytes used in the negative-electrode material are preferably argyrodite-type sulfide-based solid electrolytes, a preferable upper limit of the percentage of the argyrodite-type sulfide-based solid electrolyte to the total amount of the solid electrolytes in the negative-electrode material is 100 mass%.

The negative-electrode mixture in the negative electrode for an all-solid-state secondary battery can contain the negative-electrode material and other negative-electrode active materials that are usually used in lithium-ion secondary batteries. However, if other negative-electrode active materials are used together with the negative-electrode material as the negative-electrode active materials, the percentage of the negative-electrode material in all of the negative-electrode active materials is preferably 30 mass% or more. Note that, because a negative-electrode active material other than the negative-electrode material need not be used in the negative-electrode mixture in the negative electrode for an all-solid-state secondary battery, a preferred upper limit of the percentage of the negative-electrode material in all of the negative-electrode active materials is 100 mass%.

It is preferable that the content of all of the negative-electrode active materials that include the negative-electrode material in the negative-electrode mixture is 20 to 70 mass%.

It is possible to use, as solid electrolytes (solid electrolytes that are used separately from a negative-electrode material) in the negative electrode for an all-solid-state secondary battery, the same solid electrolytes as the above-mentioned various sulfide-based solid electrolytes, hydride-based solid electrolytes, oxide-based solid electrolytes, and the like that can be used for the negative-electrode material. Among these solid electrolytes, sulfide-based solid electrolytes are preferable, and sulfide-based solid electrolytes containing lithium and phosphorus are more preferable because of having high lithium-ion conductivity. Further, among sulfide solid electrolytes containing lithium and phosphorus, argyrodite-type sulfide-based solid electrolytes are more preferably used because argyrodite-type sulfide-based solid electrolytes have particularly high lithium ion conductivity, are chemically highly stable, and have a low Young's modulus, even when a carbon material is used as a negative-electrode active material, the negative electrode can follow expansion and shrinkage during charging and discharging, and it is possible to suppress an increase in resistance even when charging and discharging are repeated.

From the viewpoint of reducing grain boundary resistance, the average particle diameter of the solid electrolyte used in the negative electrode for an all-solid-state secondary battery (a solid electrolyte used separately from a negative-electrode material) is preferably 0.1 µm or more, and more preferably 0.2 µm or more, and from the viewpoint of forming a sufficient contact interface between the negative-electrode material and the solid electrolytes, is preferably 10 µm or less, and more preferably 5 µm or less.

The average particle diameter of various particles (the solid electrolyte, positive-electrode active material, and the like) used in this specification refers to the value of the 50% diameter (D₅₀) in a volume-based integrated fraction when the integrated volume is calculated based on particles with a small particle size, using a particle size distribution measuring device (Microtrac particle size analyzer "HRA9320" manufactured by Nikkiso Co., Ltd., etc.).

It is preferable that the content of the solid electrolyte in the negative-electrode mixture is 4 to 70 mass%.

A conductive aid such as carbon black or graphene can also be added to the negative-electrode mixture as needed. When the negative-electrode mixture contains a conductive aid, the content of the conductive aid is preferably 1 to 20 mass%.

A resin binder may be optionally added to the negative-electrode mixture. Examples of the resin binder include fluororesins such as polyvinylidene fluoride (PVDF), and acrylic resins. However, the resin binder also functions as a resistance component in the negative-electrode mixture, and thus it is desirable that the amount of the resin binder is as small as possible. Also, if the negative-electrode mixture contains a sulfide-based solid electrolyte in an amount such that it is possible to ensure favorable moldability to form a molded body made of a negative-electrode mixture without using a binder, a resin binder need not be added to the negative-electrode mixture.

If a resin binder is required for the negative-electrode mixture, the content of the resin binder is preferably 5 mass% or less, and preferably 0.5 mass% or more. On the other hand, if favorable moldability can be ensured by the effect of the sulfide-based solid electrolyte without a resin binder, the content of the resin binder in the negative-electrode mixture is preferably 0.5 mass% or less, more preferably 0.3 mass% or less, and even more preferably 0 mass% (i.e., no resin binder is added).

When a current collector is used in the negative electrode for an all-solid-state secondary battery, examples of the current collector include foils, punched metals, nets, expanded metals, and foamed metals that are made of copper or nickel; and carbon sheets.

The negative electrode for an all-solid-state secondary battery can be produced using a production method including a negative-electrode material formation step (A), and a step (B) of forming a molded body made of a negative-electrode mixture using the negative-electrode material obtained through the negative-electrode material formation step (A) and a solid electrolyte.

In the negative-electrode material formation step (A), a layer containing a solid electrolyte is formed on a surface of a carbon material by kneading the carbon material and the solid electrolyte, for example.

In this case, a negative-electrode material is obtained by forming a layer containing a solid electrolyte on the surface of a carbon material by kneading the carbon material and the solid electrolyte, i.e., mixing the carbon material and the solid electrolyte while a shearing force is being applied thereto. There is no particular limitation on the method for kneading the carbon material and the solid electrolyte as long as the carbon material and the solid electrolyte can be mixed together while a shearing force is being applied thereto, and it is possible to adopt a method using various known apparatuses.

Also, in the negative-electrode material formation step (A), the negative-electrode material can also be obtained by forming a layer containing the solid electrolyte on a surface of the carbon material, using a method for applying, to the surface of the carbon material, a composition prepared by dissolving or dispersing the solid electrolyte in a solvent, and drying the composition.

It is preferable to select a solvent that is less likely to deteriorate a solid electrolyte as the solvent used in the composition containing a solid electrolyte. In particular, the sulfide-based solid electrolytes and the hydride-based solid electrolytes cause chemical reactions with a minute amount of water, and therefore, it is preferable to use non-polar aprotic solvents such as hydrocarbon solvents including hexane, heptane, octane, nonane, decane, decaline, toluene, and xylene. In particular, it is more preferable to use a super dehydrated solvent in which the water content is reduced to 0.001 mass% (10 ppm) or less. Also, fluorine-based solvents such as "Vertrel (registered trademark)" manufactured by Du Pont-Mitsui Fluorochemicals Co., Ltd., "Zeorora (registered trademark)" manufactured by Zeon Corporation, and "Novec (registered trademark)" manufactured by Sumitomo 3M Limited, and nonaqueous organic solvents such as dichloromethane and diethyl ether can also be used.

Next, in the step (B), a molded body made of the negative-electrode mixture is formed using the negative-electrode material obtained through the negative-electrode material formation step (A) and the solid electrolyte.

A molded body made of a negative-electrode mixture can be formed by compressing, using compression molding or the like, the negative-electrode mixture prepared by mixing the negative-electrode material and a solid electrolyte, and a conductive aid, a binder, and the like that are added as needed, for example. When a negative electrode for an all-solid-state secondary battery is constituted only by a molded body made of a negative-electrode mixture, the negative electrode for an all-solid-state secondary battery can be obtained through the step (B).

On the other hand, when a negative electrode for an all-solid-state secondary battery has a current collector, the negative electrode for an all-solid-state secondary battery can be obtained by attaching a molded body made of a negative-electrode mixture obtained through the step (B) to a current collector through clamping or the like.

Also, a molded body made of a negative-electrode mixture may be formed by preparing a negative-electrode mixture-containing composition by mixing the negative-electrode mixture and a solvent, applying the composition to a substrate including a solid electrolyte layer (including the later-described solid electrolyte sheet (a solid electrolyte sheet that constitutes a solid electrolyte layer)), which opposes to the current collector and the negative electrode, drying the composition, and performing pressing processing.

It is preferable to select a solvent that is less likely to deteriorate the solid electrolyte as the solvent for the negative-electrode mixture-containing composition. It is preferable to use the same solvent as the various solvents listed above as examples of a solvent for a composition containing the solid electrolyte used in the negative-electrode material formation step (A).

From the viewpoint of increasing the capacity of a battery, the thickness of a molded body made of a negative-electrode mixture (When the negative electrode has a current collector, the thickness thereof refers to the thickness of the molded body made of a negative-electrode mixture per side of the current collector. The same applies to the following.) is preferably 200 µm or more. Note that, in general, the load properties of the battery tend to be improved by reducing the thickness of a positive electrode and a negative electrode. However, according to the present invention, it is possible to enhance the load properties thereof even when a molded body made of a negative-electrode mixture has a thickness of 200 µm or more. Therefore, the present invention has significant effects when the thickness of the molded body made of a negative-electrode mixture is 200 µm or more, for example. Also, the thickness of the molded body made of a negative-electrode mixture is usually 3000 µm or less.

Further, in the case of a negative electrode produced by forming a negative-electrode mixture layer constituted by a molded body made of a negative-electrode mixture on a current collector using a negative-electrode mixture-containing composition that contains a solvent, the negative-electrode mixture layer preferably has a thickness of 10 to 1000 µm.

### All-Solid-State Secondary Battery

An all-solid-state secondary battery according to the present invention includes a positive electrode, a negative electrode, and a solid electrolyte layer located between the positive electrode and the negative electrode, in which the negative electrode for an all-solid-state secondary battery according to the present invention is used as the negative electrode.

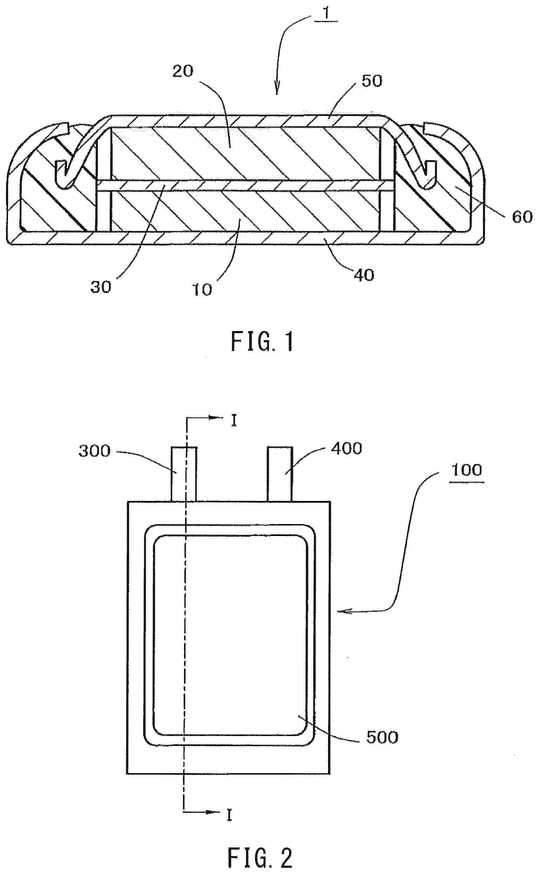

FIG. 1 is a schematic cross-sectional view showing an example of an all-solid-state secondary battery according to the present invention. An all-solid-state secondary battery 1 shown in FIG. 1 has a configuration in which a positive electrode 10, a negative electrode 20, and a solid electrolyte layer 30 located between the positive electrode 10 and the negative electrode 20 are sealed in an exterior body constituted by an exterior can 40, a sealing can 50, and a resin gasket 60 located therebetween.

The sealing can 50 is fitted into the opening portion of the exterior can 40 via the gasket 60, and the opening portion of the exterior can 40 is sealed by squeezing the end portion of the opening of the exterior can 40 inward and thereby bringing the gasket 60 into contact with the sealing can 50. Thus, a structure in which the inside of a battery is hermetically sealed is formed.

The exterior can and the sealing can made of stainless steel or the like can be used. Further, polypropylene, nylon, or the like can be used as the material of the gasket. In addition, when heat resistance is required according to the application of a battery, heatresistant resins whose melting point is higher than 240°C, such as fluororesins such as tetrafluoroethylene-perfluoroalkoxyethylene copolymers (PFA); polyphenylene ether (PPE), polysulfone (PSF), polyarylate (PAR), polyethersulfone (PES), polyphenylene sulfide (PPS), and polyether ether ketone (PEEK), can also be used as the material of the gasket. When a battery is used for an application in which heat resistance is required, a glass hermetic seal can also be used to seal the battery.

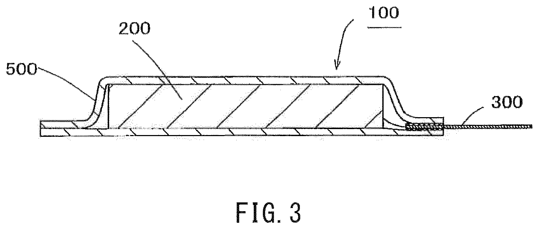

FIGS. 2 and 3 are schematic diagrams showing another example of the all-solid-state secondary battery according to the present invention. FIG. 2 is a plan view of the all-solid-state secondary battery, and FIG. 3 is a cross-sectional view taken along line I-I in FIG. 2.

An all-solid-state secondary battery 100 shown in FIGS. 2 and 3 has a configuration in which an electrode body 200 that includes a positive electrode, a solid electrolyte layer, and the negative electrode according to the present invention is housed in a laminate-film exterior body 500 formed using two metal laminate films, and the laminate-film exterior body 500 is sealed by thermally welding the outer peripheral regions of the upper and lower metal laminate films to each other. Note that the layers included in the laminate-film exterior body 500, and the positive electrode, the negative electrode, and the solid electrolyte layer included in the electrode body are not distinctively shown in FIG. 3 in order to avoid making FIG. 3 complicated.

The positive electrode included in the electrode body 200 is connected to a positive electrode external terminal 300 in the battery 100, and while not shown, the negative electrode included in the electrode body 200 is also connected to a negative electrode external terminal 400 in the battery 100. One end of the positive electrode external terminal 300 and one end of the negative electrode external terminal 400 are drawn out of the laminate-film exterior body 500 so as to enable connection to external devices and the like.

### Positive Electrode

The positive electrode of the all-solid-state secondary battery includes a molded body made of a positive-electrode mixture containing a positive-electrode active material, a conductive aid, a solid electrolyte, and the like, and examples thereof include a positive electrode constituted only by the molded body, and a positive electrode having a structure in which the molded body and a current collector are formed as a single body.

There is no particular limitation on the positive-electrode active material as long it is a positive-electrode active material that is used in conventionally known lithium-ion secondary batteries, that is, an active material that is capable of occluding and releasing Li ions. Specific examples of the positive-electrode active material include spinel-type lithium manganese composite oxides represented by LiMₓMn₂₋ₓO₄ (where M is at least one element selected from the group consisting of Li, B, Mg, Ca, Sr, Ba, Ti, V, Cr, Fe, Co, Ni, Cu, Al, Sn, Sb, In, Nb, Mo, W, Y, Ru, and Rh, and *x* satisfies 0.01≤x≤0.5), layered compounds represented by LiₓMn_{(1-y-x)}Ni_{y}M_{z}O₍₂₋ₖ₎Fₗ (where M is at least one element selected from the group consisting of Co, Mg, Al, B, Ti, V, Cr, Fe, Cu, Zn, Zr, Mo, Sn, Ca, Sr, and W, and *x y*, *z, k*, and *l* satisfy 0.8≤x≤1.2, 0<y<0.5, 0≤z≤0.5, k+1<1, -0.1≤k≤0.2, and 0≤l≤0.1), lithium cobalt composite oxides represented by LiCo₁₋ₓMₓO₂ (where M is at least one element selected from the group consisting ofAl, Mg, Ti, Zr, Fe, Ni, Cu, Zn, Ga, Ge, Nb, Mo, Sn, Sb, and Ba, and *x* satisfies 0≤x≤0.5), lithium nickel composite oxides represented by LiNi₁₋ₓMₓO₂ (where M is at least one element selected from the group consisting of Al, Mg, Ti, Zr, Fe, Co, Cu, Zn, Ga, Ge, Nb, Mo, Sn, Sb, and Ba, and *x* satisfies 0≤x≤0.5), olivine-type composite oxides represented by LiM₁₋ₓNₓPO₄ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, and Ba, and *x* satisfies 0≤x≤0.5), and a lithium titanium composite oxide represented by Li₄Ti₅O₁₂. These compounds may be used alone or in combination of two or more.

The average particle diameter of the positive-electrode active material is preferably 1 µm or more, more preferably 2 µm or more, and preferably 40 µm or less, and more preferably 30 µm or less. Note that the positive-electrode active material may be primary particles or secondary particles obtained through aggregation of primary particles. When a positive-electrode active material having an average particle diameter in the above range is used, a large interface with the solid electrolyte can be obtained, thus enhancing load properties of the battery.

It is preferable that the positive-electrode active material includes, on its surface, a reaction suppressing layer for suppressing a reaction between the positive-electrode active material and the solid electrolyte.

Direct contact between the positive-electrode active material and the solid electrolyte in the molded body made of a positive-electrode mixture may cause oxidation of the solid electrolyte, resulting in the formation of a resistance layer, and reducing ion conductivity of the molded body. As a result of preventing direct contact between the positive-electrode active material and the solid electrolyte by providing a reaction suppressing layer for suppressing a reaction with the solid electrolyte on the surface of the positive-electrode active material, it is possible to suppress a reduction in the ion conductivity of the molded body due to oxidation of the solid electrolyte.

It is sufficient that the reaction suppressing layer is made of a material that has ion conductivity and is capable of suppressing a reaction between the positive-electrode active material and the solid electrolyte. Examples of the material capable of forming the reaction suppressing layer include oxides that contain Li and at least one element selected from the group consisting of Nb, P, B, Si, Ge, Ti, and Zr, and specific examples thereof include Nb-containing oxides such as LiNbO₃; Li₃PO₄, Li₃BO₃, Li₄SiO₄, Li₄GeO₄, LiTiO₃, and LiZrOs. The reaction suppressing layer may contain only one or two or more of these oxides. Furthermore, a plurality of oxides out of these oxides may form a composite compound. Out of these oxides, Nb-containing oxides are preferably used, and LiNbO₃ is further preferably used.

It is preferable that the reaction suppressing layer is present on a surface at 0.1 to 1.0 parts by mass with respect to 100 parts by mass of the positive-electrode active material. When the reaction suppressing layer is present in this range, it is possible to favorably suppress a reaction between the positive-electrode active material and the solid electrolyte.

Examples of the method for forming the reaction suppressing layer on the surface of the positive-electrode active material include a sol-gel method, a mechanofusion method, a CVD method, and a PVD method.

It is preferable that the content of the positive-electrode active material contained in the positive-electrode mixture is 60 to 95 mass%.

Examples of the conductive aid of the positive electrode include carbon materials such as graphite (natural graphite and artificial graphite), graphene, carbon black, carbon nanofiber, and carbon nanotubes. It is preferable that the content of the conductive aid in the positive-electrode mixture is 1 to 10 mass%.

It is possible to use one or two or more of various sulfide-based solid electrolytes, hydride-based solid electrolytes, and oxide-based solid electrolytes listed above as those capable of being used in the negative electrode, as the solid electrolyte in the positive electrode. In order to further improve battery properties, it is desirable to add a sulfide-based solid electrolyte, and it is more desirable to add an argyrodite-type sulfide-based solid electrolyte.

It is preferable that the content of the solid electrolyte in the positive-electrode mixture is 4 to 30 mass%.

A resin binder may be optionally added to the positive-electrode mixture. Examples of the resin binder include fluororesins such as polyvinylidene fluoride (PVDF). However, the resin binder also functions as a resistance component in the positive-electrode mixture, and thus it is desirable that the amount of the resin binder is as small as possible. Note that a resin binder need not be added to the positive-electrode mixture when favorable moldability can be ensured to form a molded body made of a positive-electrode mixture even when the positive-electrode mixture does not contain a resin binder as in a case where a sulfide-based solid electrolyte is added to a positive-electrode mixture, for example.

If a resin binder is required for the positive-electrode mixture, the content of the resin binder is preferably 5 mass% or less, and preferably 0.5 mass% or more. On the other hand, if favorable moldability can be ensured by the effect of the sulfide-based solid electrolyte without a resin binder, the content of the resin binder in the positive-electrode mixture is preferably 0.5 mass% or less, more preferably 0.3 mass% or less, and even more preferably 0 mass% (i.e., no resin binder is added).

When a current collector is used in the positive electrode, examples of the current collector include metal foils, punched metals, nets, expanded metals, and foamed metals that are made of aluminum or stainless steel; and carbon sheets.

A molded body made of a positive-electrode mixture can be formed by compressing, using compression molding or the like, the positive-electrode mixture prepared by mixing the positive-electrode active material, a conductive aid, and a solid electrolyte, a binder, and the like that are added as needed, for example.

When a positive electrode has a current collector, the positive electrode can be produced by attaching a molded body made of a positive-electrode mixture obtained using the above-described method to a current collector through clamping or the like.

Also, a molded body made of a positive-electrode mixture may be formed by preparing a positive-electrode mixture-containing composition by mixing the positive-electrode mixture and a solvent, applying the composition to a substrate including a solid electrolyte layer (including the later-described solid electrolyte sheet (a solid electrolyte sheet that constitutes a solid electrolyte layer)), which opposes to the current collector and the positive electrode, drying the composition, and performing pressing processing.

It is preferable to select a solvent that is less likely to deteriorate the solid electrolyte as the solvent for the positive-electrode mixture-containing composition. It is preferable to use the same solvent as the various solvents listed above as examples of a solvent for a composition containing the solid electrolyte used in the negative-electrode material formation step (A).

From the viewpoint of increasing the capacity of a battery, the thickness of a molded body made of a positive-electrode mixture (When the positive electrode has a current collector, the thickness thereof refers to the thickness of the molded body made of a positive-electrode mixture per side of the current collector. The same applies to the following.) is preferably 200 µm or more. Also, the thickness of the molded body made of a positive-electrode mixture is usually 2000 µm or less.

Also, in the case of a positive electrode produced by forming a positive-electrode mixture layer constituted by a molded body made of a positive-electrode mixture on a current collector using a positive-electrode mixture-containing composition that contains a solvent, the positive-electrode mixture layer preferably has a thickness of 10 to 1000 µm.

### Solid Electrolyte Layer

It is possible to use one or two or more of various sulfide-based solid electrolytes, hydride-based solid electrolytes, and oxide-based solid electrolytes listed above as those capable of being used in the negative electrode, as the solid electrolyte in the solid electrolyte layer. However, it is desirable to add a sulfide-based solid electrolyte thereto in order to further improve the battery properties, and it is more desirable to add an argyrodite-type sulfide-based solid electrolyte. Further, it is desirable to add a sulfide-based solid electrolyte to all of the positive electrode, the negative electrode, and the solid electrolyte layer, and it is more desirable to add an argyrodite-type sulfide-based solid electrolyte.

The solid electrolyte layer can be formed using a method in which a solid electrolyte is compressed through compression molding or the like; a method in which a composition for forming a solid electrolyte layer that is prepared by dispersing a solid electrolyte in a solvent is applied to a substrate, the positive electrode, or the negative electrode and is then dried, and a compression molding process such as pressing processing is optionally performed; and the like.

It is preferable to select a solvent that is less likely to deteriorate the solid electrolyte as the solvent used for the composition for forming a solid electrolyte layer. It is preferable to use the same solvent as the various solvents listed above as examples of a solvent for a composition containing the solid electrolyte in the negative-electrode material formation step (A).

Also, the solid electrolyte layer may be constituted by a solid electrolyte sheet including a porous body such as nonwoven fabric made of a resin as a support (porous substrate), and formed by making the solid electrolyte retained in pores of the support, or covering the surface of the support with the solid electrolyte.

Further, if the solid electrolyte layer is constituted by a solid electrolyte sheet having a porous substrate, examples of the porous substrate in the solid electrolyte sheet includes fibrous materials such as woven fabric, nonwoven fabric, and mesh. In particular, woven fabric and nonwoven fabric are preferable.

There is no particular limitation on properties of the fibrous material as long as it does not react with a lithium metal and has insulating properties, and it is possible to use resins such as polyolefins (e.g., polypropylene and polyethylene); polystyrene; aramid; polyamideimide; polyimide; nylon; polyesters (e.g., polyethylene terephthalate (PET)); polyarylate; cellulose and modified cellulose; and the like. Also, inorganic materials such as glass, alumina, silica, and zirconia may be used.

Also, a binder can be added to a porous substrate in order to bind solid electrolytes together, or a solid electrolyte and a porous substrate together. Specific examples of the binder include butyl rubber, chloropyrene rubber, acrylic resin, and fluororesin.

Although there is no particular limitation on a method for producing a solid electrolyte sheet, it is preferable to produce a solid electrolyte sheet using a method including a step of dispersing the solid electrolyte together with a binder in a solvent to prepare a slurry or the like, and filling pores of the porous substrate with the slurry in a wet process. This increases the strength of the solid electrolyte sheet, and facilitates the production of solid electrolyte sheets having a large area.

A coating method such as a screen printing method, a doctor blade method, or an immersion method can be adopted as a filling method for filling the pores of the porous substrate with a slurry containing a solid electrolyte and a binder.

The thickness of the solid electrolyte layer is preferably as follows from the viewpoint of optimizing the distance between the positive electrode and the negative electrode of the battery, and suppressing the occurrence of short circuits and an increase in resistance.

If a solid electrolyte layer does not include a porous substrate, the thickness of the solid electrolyte layer is preferably 100 to 300 µm.

Also, the thickness of the solid electrolyte layer constituted by a solid electrolyte sheet having a porous substrate (the thickness of the solid electrolyte sheet that constitutes the solid electrolyte layer) is preferably 5 µm or more, more preferably 10 µm or more, and preferably 50 µm or less, and more preferably 30 µm or less.

### Electrode Body

The positive electrode and the negative electrode can be used for a battery in the form of a layered electrode body obtained by layering these electrodes with the solid electrolyte layer being located therebetween or in the form of a wound electrode body obtained by winding the above-mentioned layered electrode body.

Note that it is preferable to form the electrode body by performing compression molding in the state in which the positive electrode, the negative electrode, and the solid electrolyte layer are layered from the viewpoint of enhancing the mechanical strength of the electrode body.

### Form of Battery

The form of an all-solid-state secondary battery may be a form in which an all-solid-state secondary battery includes an exterior body constituted by an exterior can, a sealing can, and a gasket, that is, a form generally called a coin cell or a button cell as shown in FIG. 1, and a form in which an all-solid-state secondary battery includes an exterior body having a bottomed metal tubular (cylindrical or rectangular cylindrical) exterior can having a sealing structure for sealing an opening portion thereof, in addition to a form in which an all-solid-state secondary battery includes an exterior body constituted by a resin film or metal-resin laminate films as shown in FIGS. 2 and 3.

### Examples

Hereinafter, the present invention will be described in detail based on examples. However, the present invention is not limited to the following examples.

### Example 1

### Formation of Solid Electrolyte Layer

80 mg of the sulfide-based solid electrolyte (Li₆PS₅Cl) was placed in a powder molding mold having a diameter of 10 mm and was subjected to compression molding using a pressing machine to form a solid electrolyte layer.

### Production of Negative Electrode

13.5 g of graphite and 1.5 g of Li₆PS₅Cl were well kneaded to obtain a negative-electrode material (1) made of graphite having a coating layer containing an argyrodite-type sulfide-based solid electrolyte (Li₆PS₅Cl) on a surface of the graphite. The amount of the solid electrolyte in the negative-electrode material (1) was 11 parts by mass with respect to 100 parts by mass of graphite.

A negative-electrode mixture was prepared by mixing the negative-electrode material (1), graphene, and the same sulfide-based solid electrolyte as that used for the coating layer of the negative-electrode material (1) at a mass ratio of 50 : 5 : 45. Then, 15 mg of the negative-electrode mixture was placed on the solid electrolyte layer in the powder molding mold and was subjected to compression molding using a pressing machine to form a negative electrode constituted by a molded body made of negative-electrode mixture on the solid electrolyte layer.

### Formation of Layered Electrode Body

An electrode formed by attaching a cylindrical molded body made of Li metal and a cylindrical molded body made of In metal to each other was used as a counter electrode. This counter electrode was placed on a surface of the solid electrolyte layer in the powder molding mold on a side opposite to the negative electrode, and compression molding was performed using a pressing machine to form a layered electrode body.

### Assembly of Model Cell

The above-mentioned layered electrode body was used to produce an all-solid-state battery (model cell) having the same planar structure as that shown in FIG. 2. A negative-electrode current collecting foil (SUS foil) and a counter-electrode current collecting foil (SUS foil) were attached to a surface of an aluminum laminate film included in a laminate-film exterior body on the interior side of the exterior body so as to be adjacent to each other with a certain distance being provided therebetween. Current collecting foils cut out into a shape provided with a main body portion that is to oppose a surface on the negative electrode side or the counter electrode side of the layered electrode body, and a negative electrode external terminal 400 and a counter electrode external terminal 300 that protrude from the main body portion toward the outside of the battery were used.

A model cell was obtained by placing the layered electrode body on the negative-electrode current collecting foil of the laminate-film exterior body, covering the layered electrode body with the laminate-film exterior body such that the counter-electrode current collecting foil was disposed on the counter electrode of the layered electrode body, and thermally welding the remaining three sides of the laminate-film exterior body under vacuum to seal the laminate-film exterior body.

### Example 2

12.9 g of graphite and 2.1 g of Li₆PS₅Cl were well kneaded to obtain a negative-electrode material (2) made of graphite having a coating layer containing an argyrodite-type sulfide-based solid electrolyte (Li₆PS₅Cl) on a surface of the graphite. The amount of the solid electrolyte in the negative-electrode material (2) was 16 parts by mass with respect to 100 parts by mass of graphite.

A negative-electrode mixture was prepared by mixing the negative-electrode material (2), graphene, and the same sulfide-based solid electrolyte as that used for the coating layer of the negative-electrode material (2) at a mass ratio of 52 : 5 : 43. Then, a negative electrode constituted by a molded body made of the negative-electrode mixture was formed on a solid electrolyte layer in the same manner as in Example 1, except that the negative-electrode mixture was used.

Then, a layered electrode body was formed in the same manner as in Example 1, except that a single body of the negative electrode and the solid electrolyte layer formed as described above was used, and a model cell was produced in the same manner as in Example 1, except that the layered electrode body was used.

### Example 3

12.3 g of graphite and 2.7 g of Li₆PS₅Cl were well kneaded to obtain a negative-electrode material (3) made of graphite having a coating layer containing an argyrodite-type sulfide-based solid electrolyte (Li₆PS₅Cl) on a surface of the graphite. The amount of the solid electrolyte in the negative-electrode material (3) was 22 parts by mass with respect to 100 parts by mass of graphite.

A negative-electrode mixture was prepared by mixing the negative-electrode material (3), graphene, and the same sulfide-based solid electrolyte as that used for the coating layer of the negative-electrode material (3) at a mass ratio of 55 : 5 : 40. Then, a negative electrode constituted by a molded body made of the negative-electrode mixture was formed on a solid electrolyte layer in the same manner as in Example 1, except that the negative-electrode mixture was used.

Then, a layered electrode body was formed in the same manner as in Example 1, except that a single body of the negative electrode and the solid electrolyte layer formed as described above was used, and a model cell was produced in the same manner as in Example 1, except that the layered electrode body was used.

### Comparative Example 1

A negative-electrode mixture was prepared by mixing graphite having no coating layer, graphene, and an argyrodite-type sulfide-based solid electrolyte (Li₆PS₅Cl) at a mass ratio of 45 : 5 : 50. Then, a negative electrode constituted by a molded body made of the negative-electrode mixture was formed on a solid electrolyte layer in the same manner as in Example 1, except that the negative-electrode mixture was used.

Then, a layered electrode body was formed in the same manner as in Example 1, except that a single body of the negative electrode and the solid electrolyte layer formed as described above was used, and a model cell was produced in the same manner as in Example 1, except that the layered electrode body was used.

### Comparative Example 2

11.7 g of graphite and 3.3 g of Li₆PS₅Cl were well kneaded to obtain a negative-electrode material (4) made of graphite having a coating layer containing an argyrodite-type sulfide-based solid electrolyte (Li₆PS₅Cl) on a surface of the graphite. The amount of the solid electrolyte in the negative-electrode material (4) was 28 parts by mass with respect to 100 parts by mass of graphite.

A negative-electrode mixture was prepared by mixing the negative-electrode material (4), graphene, and the same sulfide-based solid electrolyte as that used for the coating layer of the negative-electrode material (4) at a mass ratio of 58 : 5 : 37. Then, a negative electrode constituted by a molded body made of the negative-electrode mixture was formed on a solid electrolyte layer in the same manner as in Example 1, except that the negative-electrode mixture was used.

Then, a layered electrode body was formed in the same manner as in Example 1, except that a single body of the negative electrode and the solid electrolyte layer formed as described above was used, and a model cell was produced in the same manner as in Example 1, except that the layered electrode body was used.

The model cells having the negative electrodes of Examples 1 to 3 and Comparative Examples 1 and 2 were evaluated as follows.

### Evaluation of CC Capacity

Each model cell was charged to a voltage of -0.62 V with a constant current at a current value of 0.5 C while being subjected to pressure (1 t/cm²) at a temperature of 23°C, subsequently charged with a voltage of -0.62 V until the current value reached 0.01 C, and was then discharged at a current value of 0.5 C until the voltage reached 1.88 V. This series of steps was repeated twice, and the capacity at the second instance of charging at a constant current and the capacity (initial capacity) at the second instance of discharging were measured. Then, the CC capacity was evaluated by representing a value, which is obtained by dividing the capacity of each model cell at the second instance of charging at a constant current by the initial capacity as a percentage.

### Measurement of Direct-Current Resistance (DCR)

Each model cell obtained after initial capacity measurement was charged at a constant current and charged with a constant voltage while being subjected to pressure (1 t/cm²) at a temperature of 23°C under the same conditions as in the initial capacity measurement, and was then discharged until the state of charge (SOC) reached 50% at a current value of 0.05 C, and was left to stand for 1 hour. The resulting model cell was subjected to pulse discharge for 10 sec at a current value of 0.1 C, and the voltage was then measured. The voltage was determined by subtracting a voltage increase attributed to the solid electrolyte layer and the counter electrode from a voltage difference before and after pulse discharge, and the DCR was calculated based on the determined voltage value.

It can be said that the negative electrode used in a model cell with a smaller DCR obtained using this method can constitute an all-solid-state secondary battery having a lower internal resistance, enhanced load properties, and a larger CC capacity.

The results of evaluations above are shown in Table 1 together with A, B, and A/B values relating to the negative electrodes. Note that the results of evaluations above are shown in Table 1 using relative values where the result of Comparative Example 1 was set to 100.

**Table 1**

| | Negative Electrode | | | Evaluation Results | |
|---|---|---|---|---|---|
| | A | B | A/B | DCR (Ω) | CC Capacity (%) |
| Ex. 1 | 0.27 | 0.47 | 0.57 | 95 | 135 |
| Ex. 2 | 0.12 | 0.47 | 0.26 | 81 | 185 |
| Ex. 3 | 0.09 | 0.51 | 0.18 | 90 | 126 |
| Comp. Ex. 1 | 0.44 | 0.48 | 0.92 | 100 | 100 |
| Comp. Ex. 2 | 0.04 | 0.47 | 0.09 | 102 | 103 |

In each of the model cells produced in Examples 1 to 3, a negative electrode constituted by a molded body made of a negative-electrode mixture that had an appropriate A/B value and contained a solid electrolyte and a negative-electrode material having a layer containing a solid electrolyte on the surface of a carbon material was used, and the model cells had a low DCR. Therefore, use of these negative electrodes can improve the load properties and the CC capacity of an all-solid-state secondary battery.

In contrast, a negative electrode that had an inappropriate A/B value was used in the model cells of Comparative Examples 1 and 2, and these model cells had a higher DCR than in the examples.

### Example 4

4.2 g of hard carbon and 1.8 g of Li₆PS₅Cl were well kneaded to obtain a negative-electrode material (5) made of hard carbon having a coating layer containing an argyrodite-type sulfide-based solid electrolyte (Li_{B}PS₅Cl) on a surface of the hard carbon. The amount of the solid electrolyte in the negative-electrode material (5) was 43 parts by mass with respect to 100 parts by mass of hard carbon.

A negative-electrode mixture was prepared by mixing the negative-electrode material (5), graphene, and the same sulfide-based solid electrolyte as that used for the coating layer of the negative-electrode material (5) at a mass ratio of 29 : 11 : 60. Then, a negative electrode constituted by a molded body made of the negative-electrode mixture was formed on a solid electrolyte layer in the same manner as in Example 1, except that the negative-electrode mixture was used.

Then, a layered electrode body was formed in the same manner as in Example 1, except that a single body of the negative electrode and the solid electrolyte layer formed as described above was used, and a model cell was produced in the same manner as in Example 1, except that the layered electrode body was used.

### Example 5

3.6 g of hard carbon and 2.4 g of Li₆PS₅Cl were well kneaded to obtain a negative-electrode material (6) made of hard carbon having a coating layer containing an argyrodite-type sulfide-based solid electrolyte (Li_{B}PS₅Cl) on a surface of the hard carbon. The amount of the solid electrolyte in the negative-electrode material (6) was 67 parts by mass with respect to 100 parts by mass of hard carbon.

A negative-electrode mixture was prepared by mixing the negative-electrode material (6), graphene, and the same sulfide-based solid electrolyte as that used for the coating layer of the negative-electrode material (6) at a mass ratio of 33 : 11 : 56. Then, a negative electrode constituted by a molded body made of the negative-electrode mixture was formed on a solid electrolyte layer in the same manner as in Example 1, except that the negative-electrode mixture was used.

Then, a layered electrode body was formed in the same manner as in Example 1, except that a single body of the negative electrode and the solid electrolyte layer formed as described above was used, and a model cell was produced in the same manner as in Example 1, except that the layered electrode body was used.

### Example 6

3 g of hard carbon and 3 g of Li₆PS₅Cl were well kneaded to obtain a negative-electrode material (7) made of hard carbon having a coating layer containing an argyrodite-type sulfide-based solid electrolyte (Li_{B}PS₅Cl) on a surface of the hard carbon. The amount of the solid electrolyte in the negative-electrode material (7) was 100 parts by mass with respect to 100 parts by mass of hard carbon.

A negative-electrode mixture was prepared by mixing the negative-electrode material (7), graphene, and the same sulfide-based solid electrolyte as that used for the coating layer of the negative-electrode material (7) at a mass ratio of 40 : 11 : 49. Then, a negative electrode constituted by a molded body made of the negative-electrode mixture was formed on a solid electrolyte layer in the same manner as in Example 1, except that the negative-electrode mixture was used.

Then, a layered electrode body was formed in the same manner as in Example 1, except that a single body of the negative electrode and the solid electrolyte layer formed as described above was used, and a model cell was produced in the same manner as in Example 1, except that the layered electrode body was used.

### Comparative Example 3

A negative-electrode mixture was prepared by mixing hard carbon having no coating layer, graphene, and an argyrodite-type sulfide-based solid electrolyte (Li₆PS₅Cl) at a mass ratio of 20 : 11 : 69. Then, a negative electrode constituted by a molded body made of the negative-electrode mixture was formed on a solid electrolyte layer in the same manner as in Example 1, except that the negative-electrode mixture was used.

Then, a layered electrode body was formed in the same manner as in Example 1, except that a single body of the negative electrode and the solid electrolyte layer formed as described above was used, and a model cell was produced in the same manner as in Example 1, except that the layered electrode body was used.

The CC capacity was evaluated and DCR was measured for the model cells having the negative electrodes of Examples 4 to 6 and Comparative Example 3 in the same manner as in Example 1 and the like. The results of these evaluations are shown in Table 2 together with A, B, and A/B values relating to the negative electrodes. Note that the results of evaluations above are shown in Table 2 using relative values where the result of Comparative Example 3 was set to 100.

**Table 2**

| | Negative Electrode | | | Evaluation Results | |
|---|---|---|---|---|---|
| | A | B | A/B | DCR (Ω) | CC Capacity (%) |
| Ex. 4 | 0.26 | 0.35 | 0.74 | 88 | 130 |
| Ex. 5 | 0.25 | 0.35 | 0.71 | 86 | 140 |
| Ex. 6 | 0.18 | 0.34 | 0.53 | 83 | 144 |
| Comp. Ex. 3 | 0.31 | 0.33 | 0.94 | 100 | 100 |

Similarly to the model cells of Examples 1 to 3 produced using the negative electrodes containing negative-electrode materials in which graphite was used as a carbon material, in the model cells of Examples 4 to 6 produced using the negative electrodes constituted by the molded bodies made of negative-electrode mixtures having the appropriate A/B values and containing solid electrolytes and the negative-electrode materials having layers containing solid electrolytes on the surfaces of hard carbon, which is a carbon material, DCR was lower than that in the model cell (the model cell produced in Comparative Example 3) in which a negative electrode having an inappropriate A/B value was used. Therefore, when these negative electrodes of Examples 4 to 6 are used, it is possible to improve the load properties and the CC capacity of an all-solid-state secondary battery.

### Industrial Applicability

The all-solid-state secondary battery according to the present invention may be applied to the same applications as those of conventionally known secondary batteries. However, since the all-solid-state secondary battery according to the present invention includes a solid electrolyte instead of an organic electrolyte solution, it has excellent heat resistance and can thus be favorably used in applications that are exposed to high temperatures.

### Description of Reference Numerals

- 1, 100: All-solid-state secondary battery
- 10: Positive electrode
- 20: Negative electrode
- 30: Solid electrolyte layer
- 40: Exterior can
- 50: Sealing can
- 60: Gasket
- 200: Electrode Body
- 300: Positive electrode external terminal
- 400: Negative electrode external terminal
- 500: Laminate-film exterior body

## Claims

1. A negative electrode (20) for an all-solid-state secondary battery (1; 100), the negative electrode (20) comprising:
a molded body made of a negative-electrode mixture containing a solid electrolyte and a negative-electrode material that contains a negative-electrode active material,
wherein the negative-electrode material contains a carbon material as the negative-electrode active material, and
an argyrodite-type sulfide-based solid electrolyte is contained as the solid electrolyte,
**characterised in that** a layer containing a solid electrolyte is formed on a surface of the negative-electrode material, and
an A/B value is 0.1 or more and 0.8 or less where a percentage of the area of the carbon material to the area of a surface of the molded body is A(%) and a percentage of the area of the carbon material to the area of a cross-section of the molded body is B(%), wherein the values A and B are determined by following the protocol indicated in the description using a scanning electron microscope, and wherein the cross-section is made perpendicularly to a planar direction of the molded body.

2. The negative electrode (20) for an all-solid-state secondary battery (1; 100) according to claim 1, wherein the A/B value is 0.1 or more and 0.6 or less.

3. The negative electrode (20) for an all-solid-state secondary battery (1; 100) according to claim 1 or 2, comprising
only hard carbon as the negative-electrode active material,
wherein the A/B value is 0.2 or more and 0.6 or less.

4. The negative electrode (20) for an all-solid-state secondary battery (1; 100) according to claim 1 or 2, comprising
only graphite as the negative-electrode active material,
wherein the A/B value is 0.1 or more and 0.4 or less.

5. The negative electrode (20) for an all-solid-state secondary battery (1; 100) according to any one of claims 1 to 4, wherein the content of a binder in the molded body made of the negative-electrode mixture is 0.5 mass% or less.

6. An all-solid-state secondary battery (1; 100) comprising:
a positive electrode (10);
a negative electrode (20); and
a solid electrolyte layer (30) located between the positive electrode (10) and the negative electrode (20),
wherein the all-solid-state secondary battery (1; 100) includes the negative electrode (20) for an all-solid-state secondary battery (1; 100) according to any one of claims 1 to 5 as the negative electrode (20).

7. Use of the all-solid-state secondary battery (1; 100) according to claim 6 as a power source for a portable electronic device.

8. The use according to claim 7, wherein the portable electronic device is a cellular phone or a laptop personal computer.

9. Use of the all-solid-state secondary battery (1; 100) according to claim 6 as a power source for an electric vehicle.

## Patentansprüche

1. Negative Elektrode (20) für eine Festkörper-Sekundärbatterie (1; 100), die negative Elektrode (20) umfassend:
einen Formkörper aus einer einen Festelektrolyten und ein Negative-Elektrode-Material, das ein Negative-Elektrode-Aktivmaterial enthält, enthaltenden Negative-Elektrode-Mischung,
wobei das Negative-Elektrode-Material ein Kohlenstoffmaterial als das Negative-Elektrode-Aktivmaterial enthält, und
ein Argyrodit-Typ-Sulfid-basierter Festelektrolyt ist als der Festelektrolyt enthalten,
**dadurch gekennzeichnet, dass**
eine einen Festelektrolyten enthaltenden Lage an einer Oberfläche der negativen Elektrode gebildet ist, und
ein A/B-Wert 0,1 oder mehr und 0,8 oder weniger beträgt, worin ein Prozentanteil der Fläche des Kohlenstoffmaterials an der Fläche der Oberfläche des Formkörpers A(%) ist und ein Prozentanteil der Fläche des Kohlenstoffmaterials an der Fläche eines Querschnitts des Formkörpers B(%) ist, wobei die Werte A und B nach dem in der Beschreibung angegebenen Protokoll mittels eines Rasterelektronenmikroskops bestimmt werden, und
wobei der Querschnitt senkrecht zu einer Ebenenrichtung des Formkörpers genommen wird.

2. Negative Elektrode (20) für eine Festkörper-Sekundärbatterie (1; 100) gemäß Anspruch 1, wobei der A/B-Wert 0,1 oder mehr und 0,6 oder weniger beträgt.

3. Negative Elektrode (20) für eine Festkörper-Sekundärbatterie (1; 100) gemäß Anspruch 1 oder 2, wobei als das Negative-Elektrode-Aktivmaterial nur harter Kohlenstoff umfasst ist, und wobei der A/B-Wert 0,2 oder mehr und 0,6 oder weniger beträgt.

4. Negative Elektrode (20) für eine Festkörper-Sekundärbatterie (1; 100) gemäß Anspruch 1 oder 2, wobei als das Negative-Elektrode-Aktivmaterial nur Graphit umfasst ist, und wobei der A/B-Wert 0,1 oder mehr und 0,4 oder weniger beträgt.

5. Negative Elektrode (20) für eine Festkörper-Sekundärbatterie (1; 100) gemäß einem der Ansprüche 1 bis 4, wobei der Gehalt an einem Binder im Formkörper aus der Negative-Elektrode-Mischung 0,5 Massen% oder weniger beträgt.

6. Festkörper-Sekundärbatterie (1; 100), umfassend:
eine positive Elektrode (10);
eine negative Elektrode (20); und
eine zwischen der positiven Elektrode (10) und der negativen Elektrode (20) angeordnete Festelektrolyt-Lage (30),
wobei die Festkörper-Sekundärbatterie (1; 100) die negative Elektrode (20) für eine Festkörper-Sekundärbatterie (1; 100) gemäß einem der Ansprüche 1 bis 5 als die negative Elektrode (20) beinhaltet.

7. Verwendung der Festkörper-Sekundärbatterie (1; 100) gemäß Anspruch 6 als Stromquelle für ein tragbares elektronisches Gerät.

8. Verwendung gemäß Anspruch 7, wobei das tragbare elektronische Gerät ein Mobiltelefon oder ein Laptop-PC ist.

9. Verwendung der Festkörper-Sekundärbatterie (1; 100) gemäß Anspruch 6 als Stromquelle für ein Elektro-Fahrzeug.

## Revendications

1. Électrode négative (20) destinée à une batterie secondaire à l'état tout solide (1; 100), l'électrode négative (20) comprenant :
un corps moulé fait d'un mélange d'électrode négative contenant un électrolyte solide et d'un matériau d'électrode négative qui contient un matériau actif d'électrode négative,
dans laquelle le matériau d'électrode négative contient un matériau carboné en guise de matériau actif d'électrode négative, et
un électrolyte solide à base de sulfure de type argyrodite est contenu en guise d'électrolyte solide,
**caractérisé en ce que**
une couche contenant un électrolyte solide est formée sur une surface du matériau d'électrode négative, et
une valeur A/B est supérieure ou égale à 0,1 et inférieure ou égale à 0,8 où un pourcentage de l'aire du matériau carboné par rapport à l'aire d'une surface du corps moulé est de A(%) et un pourcentage de l'aire du matériau carboné par rapport à l'aire d'une section transversale du corps moulé est de B(%), dans laquelle les valeurs A et B sont déterminées en suivant le protocole indiqué dans la description à l'aide d'un microscope électronique à balayage, et dans laquelle la section transversale est faite perpendiculairement à une direction plane du corps moulé.

2. Électrode négative (20) destinée à une batterie secondaire à l'état tout solide (1 ; 100) selon la revendication 1, dans laquelle la valeur A/B est supérieure ou égale à 0,1 et inférieure ou égale à 0,6.

3. Électrode négative (20) destinée à une batterie secondaire à l'état tout solide (1 ; 100) selon la revendication 1 ou 2, comprenant uniquement du carbone dur en guise de matériau actif d'électrode négative, dans laquelle la valeur A/B est supérieure ou égale à 0,2 et inférieure ou égale à 0,6.

4. Électrode négative (20) destinée à une batterie secondaire à l'état tout solide (1 ; 100)
selon la revendication 1 ou 2, comprenant
uniquement du graphite en guise de matériau actif d'électrode négative, dans laquelle la valeur A/B est supérieure ou égale à 0,1 et inférieure ou égale à 0,4.

5. Électrode négative (20) destinée à une batterie secondaire à l'état tout solide (1 ; 100) selon l'une quelconque des revendications 1 à 4, dans laquelle la teneur d'un liant dans le corps moulé fait du mélange d'électrode négative est inférieure ou égale à 0,5 % en masse.

6. Batterie secondaire à l'état tout solide (1 ; 100) comprenant :
une électrode positive (10) ;
une électrode négative (20) ; et
une couche d'électrolyte solide (30) localisée entre l'électrode positive (10) et
l'électrode négative (20),
dans laquelle la batterie secondaire à l'état tout solide (1 ; 100) comporte l'électrode négative (20) pour une batterie secondaire à l'état tout solide (1 ; 100) selon l'une quelconque des revendications 1 à 5 en guise d'électrode négative (20).

7. Utilisation de la batterie secondaire à l'état tout solide (1 ; 100) selon la revendication 6 en guise de source d'alimentation pour un dispositif électronique portable.

8. Utilisation selon la revendication 7, dans laquelle le dispositif électronique portable est un téléphone cellulaire ou un ordinateur portable personnel.

9. Utilisation de la batterie secondaire à l'état tout solide (1 ; 100) selon la revendication 6 en guise de source d'alimentation pour un véhicule électrique.
